# EUROPEAN PATENT APPLICATION

(11) **EP 4 447 542 A1**
(43) Date of publication of application: **16.10.2024**
(21) Application number: 22920782.4
(22) Date of filing: 21.11.2022
(51) Int. Cl.: H04W 28/18, H04W 84/12, H04W 84/18, H04W 92/18, H04W 72/12

(54) **METHOD FOR SETTING AVAILABLE CHANNELS FOR WLAN AND ELECTRONIC DEVICE FOR PERFORMING SAME METHOD**

(30) Priority: 17.01.2022 KR 20220006482; 21.04.2022 KR 20220049753
(71) Applicant: Samsung Electronics Co., Ltd., Suwon-si, Gyeonggi-do 16677 (KR)
(72) Inventor: JANG, Wonjun, Suwon-si, Gyeonggi-do 16677 (KR); JUNG, Buseop, Suwon-si, Gyeonggi-do 16677 (KR); MIN, Hyunkee, Suwon-si, Gyeonggi-do 16677 (KR); LEE, Sunkee, Suwon-si, Gyeonggi-do 16677 (KR)
(74) Representative: HGF
(86) International application number: PCT/KR2022/018370
(87) International publication number: WO 2023/136453

(57) **Abstract**

An electronic device according to an embodiment may receive a management frame transmitted by an external device, obtain, as target information, at least one of a national code and available channel information, on the basis of the management frame, and set one or more available channels for the electronic device, on the basis of the obtained target information. Various other embodiments may also be possible.

## Description

### Technical Field

Various embodiments relate to technology for setting available channels of an electronic device for a wireless local area network (WLAN).

### Background Art

A wireless local area network (WLAN) may also be referred to as a wireless local area network (LAN) or wireless-fidelity (Wi-Fi) and may refer to a system for establishing a network environment from a hub to each terminal by using a wireless frequency or light instead of a wire cable in an outdoor environment or an indoor environment, which is limited to a space or a building, such as an office, a shopping center, or a house. The WLAN may not need wiring and may enable easy relocation of terminals, mobile communication, and network establishment in a short time. In addition, the WLAN is used for various services in various fields because the WLAN enables a large amount of data to be transmitted and received with a low transmission delay.

### Disclosure of the Invention

### Technical Solutions

An electronic device may use wireless-fidelity peer-to-peer (Wi-Fi P2P) (or Wi-Fi Direct) or neighborhood aware networking (NAN) for exchanging data with other devices as well as an external device, such as a server. Currently, Wi-Fi P2P may be provided based on 2.4 gigahertz (GHz), 5 GHz, and 6 GHz frequency bands. The channels that an electronic device may use may vary depending on the country. Accordingly, frequency band setting for use of Wi-Fi P2P may need to vary depending on the country in which an electronic device is located.

An embodiment may provide an electronic device for setting available channels for wireless local area network (WLAN) P2P or NAN based on information obtained from an external electronic device.

However, the technical goals are not limited to the foregoing goals, and there may be other technical goals.

According to various embodiments, an electronic device includes a communication module configured to exchange data with an external device and at least one processor configured to control the electronic device, wherein the processor is configured to receive a management frame transmitted by the external device using the communication module, obtain, as target information, at least one of a country code and available channel information based on the management frame, and set one or more available channels for the electronic device based on the obtained target information.

According to various embodiments, a method performed by the electronic device includes receiving a management frame transmitted by an external device, obtaining, as target information, at least one of a country code and available channel information based on the management frame, and setting one or more available channels for the electronic device based on the obtained target information.

### Effects of the Invention

According to various embodiments, an electronic device for setting available channels for wireless local area network peer-to-peer (WLAN P2P) or neighborhood aware networking (NAN) based on information obtained from an external electronic device may be provided.

### Brief Description of the Drawings

FIG. 1 is a block diagram of an electronic device in a network environment, according to various embodiments.
FIG. 2 illustrates electronic devices disposed on a plane, according to various embodiments.
FIG. 3a illustrates channels in a 2.4 gigahertz (GHz) band, according to an example.
FIG. 3b illustrates channels in a 5 GHz band, according to an example.
FIG. 3c illustrates channels in a 6 GHz band, according to an example.
FIG. 4 is a flowchart of a method of setting available channels for an electronic device, according to various embodiments.
FIG. 5 is a signal flowchart of a method of setting available channels of an electronic device based on a probe request transmitted by an external device, according to various embodiments.
FIG. 6 is a signal flowchart of a method of setting available channels of an electronic device based on a group owner (GO) negotiation response transmitted by an external device, according to various embodiments.
FIG. 7 is a signal flowchart of a method of setting available channels of an electronic device based on a GO negotiation request transmitted by an external device, according to various embodiments.
FIG. 8 is a signal flowchart of a method of setting available channels of an electronic device based on an invitation request transmitted by an external device, according to various embodiments.
FIGS. 9a and 9b are signal flowcharts of a method of setting available channels of an electronic device based on an invitation response transmitted by an external device, according to various embodiments.
FIG. 10 is a signal flowchart of a method of setting available channels of an electronic device based on a neighborhood aware networking (NAN) beacon frame transmitted by an external device, according to various embodiments.
FIG. 11 is a signal flowchart of a method of setting available channels of an electronic device based on a service discovery frame (SDF) transmitted by an external device, according to various embodiments.
FIG. 12 is a signal flowchart of a method of setting available channels of an electronic device based on a data path request transmitted by an external device, according to various embodiments.
FIG. 13 is a signal flowchart of a method of setting available channels based on an NAN frame received by an electronic device from an external device and moving an NAN data path to another path based on the available channels, wherein the NAN data path is formed between the electronic device and another external device.
FIG. 14 is a signal flowchart of a method in which an electronic device connected to an external device via a Bluetooth low energy (BLE) network obtains a country code based on a data frame received through the BLE network.

### Best Mode for Carrying Out the Invention

Hereinafter, various embodiments of the present disclosure will be described with reference to the accompanying drawings. However, this is not intended to limit the present disclosure to specific embodiments, and it should be understood that various modifications, equivalents, and/or alternatives of the embodiments of the present disclosure are included.

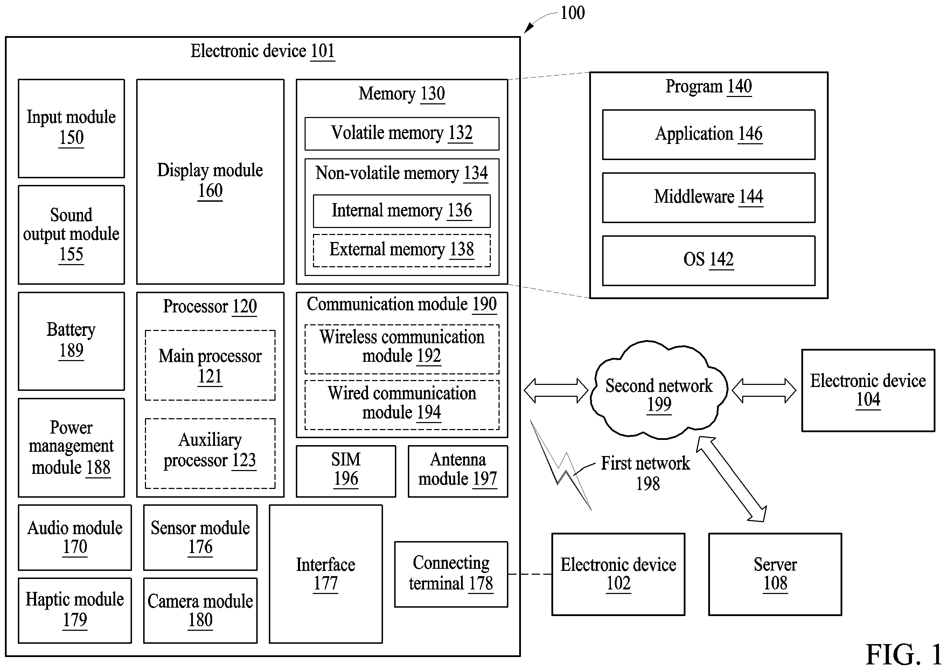

FIG. 1 is a block diagram of an electronic device in a network environment according to various embodiments.

FIG. 1 is a block diagram of an electronic device 101 in a network environment 100, according to various embodiments. Referring to FIG. 1, the electronic device 101 in the network environment 100 may communicate with an electronic device 102 via a first network 198 (e.g., a short-range wireless communication network) or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added to the electronic device 101. In some embodiments, some (e.g., the sensor module 176, the camera module 180, or the antenna module 197) of the components may be integrated as a single component (e.g., the display module 160).

The processor 120 may execute, for example, software (e.g., the program 140) to control at least one other component (e.g., a hardware or software component) of the electronic device 101 connected to the processor 120 and may perform various data processing or computations. According to an embodiment, as at least a portion of data processing or computations, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a portion of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated through machine learning. Such learning may be performed by, for example, the electronic device 101, in which an AI model is executed, or performed via a separate server (e.g., the server 108). A learning algorithm may include, but is not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from the outside (e.g., a user) of the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and a control circuit to control a corresponding one of the display, the hologram device, and the projector. According to an embodiment, the display module 160 may include a touch sensor adapted to detect a touch or a pressure sensor adapted to measure an intensity of a force incurred by the touch.

The audio module 170 may convert a sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a fifth generation (5G) network after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a millimeter wave (mmWave) band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form an mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer a result of the performance to the electronic device 101. The electronic device 101 may provide the result, with or without further processing the result, as at least part of a response to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. The wearable device may be a device for providing a user with augmented reality (AR), virtual reality (VR), mixed reality (MR), or extended reality (XR). For example, the device may take the form of a watch, glasses, a mask, a neckband, earphones, or headphones. According to an embodiment of the disclosure, the electronic device is not limited to those described above.

It should be appreciated that various embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," may include any one of the items listed together in the corresponding one of the phrases, or all possible combinations thereof. Terms, such as "1^{st}", "2^{nd}", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments of the disclosure as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. A machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more of other operations may be added.

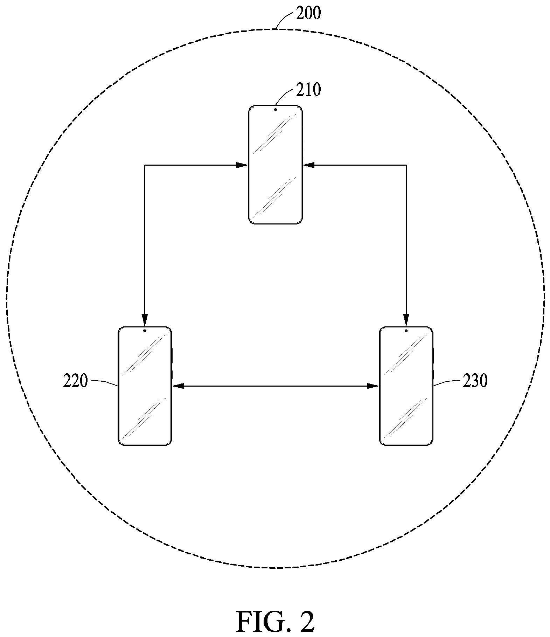

FIG. 2 illustrates electronic devices disposed on a plane, according to various embodiments.

An electronic device 210 (e.g., the electronic device 101 of FIG. 1) may identify electronic devices 220 and 230 by scanning channels in frequency bands used by the electronic devices 220 and 230 around the electronic device 210. The electronic device 210, by using detected channels, may communicate with the electronic devices 220 and 230. For example, each of the electronic devices 220 and 230 may be a user terminal (e.g., the electronic device 102 of FIG. 1).

### <Electronic devices that operate with a wireless-fidelity peer-to-peer (Wi-Fi P2P) communication protocol>

According to an embodiment, the electronic device 210 may use a Wi-Fi P2P (or Wi-Fi Direct) communication protocol (hereinafter, "Wi-Fi P2P") to form a group with at least one of the electronic devices 220 and 230. For example, the electronic device 210 may be a group owner (GO) of the formed group. When operating as a GO, the electronic device 210 may play a role, such as an access point (AP) in the formed group. In another example, the electronic device 210 may be a group client (GC) of the formed group. For example, frequency bands used by the electronic devices 210, 220, and 230 may include at least one of 2.4 gigahertz (GHz), 5 GHz, and 6 GHz bands.

Similar to scanning (SCAN) performed by a station (STA) to detect an AP in a Wi-Fi communication protocol (hereinafter, "Wi-Fi"), in Wi-Fi P2P, the electronic device 210 may perform P2P discovery to detect the electronic devices 220 and 230 around the electronic device 210. The electronic device 210 and the electronic device 220 may perform P2P discovery by exchanging a probe request and a probe response therebetween.

When an application (or a program) using Wi-Fi P2P is executed or a trigger is input through a Wi-Fi simple configuration (WSC) button, the electronic device 210 may actively operate in a P2P discovery mode.

The electronic device 210 that starts the P2P discovery mode may scan all channels of a frequency band in a manner similar to Wi-Fi scanning. Through the above scanning, a legacy AP that supports Wi-Fi, a Wi-Fi P2P electronic device that operates as a GO of a P2P group, and a Wi-Fi P2P electronic device that is not yet included in the P2P group may be detected. The electronic device 210 may repeat listening and searching while exchanging a probe request and a probe response with another electronic device during the scanning process.

According to an example, a probe request transmitted by an external electronic device (e.g., the electronic device 220) may include listen channel attributes. A listen channel attribute may include a country string field indicating a country code and a channel number field indicating a channel number.

According to an embodiment, in Wi-Fi P2P, a probe response may be transmitted by an electronic device operating as a GO of a group. Since the electronic device operating as a GO plays the same role as a Wi-Fi AP, the electronic device may need to transmit a probe response to a probe request transmitted by another electronic device. The electronic device operating as a GO may need to transmit a probe response not only to a probe request from an electronic device operating in Wi-Fi P2P but also to a probe request from an electronic device operating in legacy Wi-Fi. Compatibility between Wi-Fi P2P and legacy Wi-Fi may be supported through the technique described above.

According to an embodiment, in Wi-Fi P2P, a probe response may be transmitted by an electronic device operating in a receiving (RX) mode. For example, the electronic device operating in the RX mode may transmit a probe response only to a probe request transmitted by an electronic device operating in Wi-Fi P2P. Channels on which an electronic device not operating as a GO may be present in a listening state may be limited to channels 1, 6, and 11. Channels 1, 6, and 11 may each be referred to as a listening channel or a social channel. An electronic device that receives a probe request from another electronic device through a social channel may transmit a probe response.

According to an embodiment, in Wi-Fi P2P, a probe response may be transmitted by an electronic device operating in a concurrent mode defined in Wi-Fi P2P. For example, the electronic device may transmit a probe response to a probe request for P2P connection, even when the electronic device is connected to an AP in an STA mode.

According to an embodiment, after P2P discovery is performed, service discovery may be further performed.

According to an embodiment, after P2P discovery or service discovery is performed, provision discovery may be further performed.

According to an embodiment, after provision discovery is performed, group formation may be further performed. Through a GO negotiation process, one of the electronic devices may be determined as a GO, while the remaining electronic devices may be determined as a GC. When GO negotiation is completed, provisioning may be performed to exchange credentials between the electronic devices. When provisioning is performed, a connection between the electronic devices may be finally formed.

### <Electronic devices operating with a neighborhood aware networking (NAN) communication protocol>

According to an embodiment, the electronic device 210 may use an NAN (or Wi-Fi Aware) communication protocol (hereinafter, "NAN") to form a group with at least one of the electronic devices 220 and 230. For example, frequency bands used by the electronic devices 210, 220, and 230 may include at least one of 2.4 GHz and 5 GHz bands.

NAN may synchronize time clocks among electronic devices included in an NAN cluster and enable the electronic devices to exchange not only beacon frames and service discovery frames (SDFs) but also various NAN action frames (NAFs) within the same discovery window (DW) period. DW may be the time during which an electronic device is awake.

In NAN, an electronic device may set an additional active time slot in a period between DWs or perform additional communication with another device by negotiating with another electronic device.

According to an example, an NAN discovery operation may necessarily operate on channel 6 in a 2.4 GHz frequency band. The NAN discovery operation may optionally operate on one channel in a 5 GHz frequency band, according to local (or national) regulations. A band used for the NAN discovery operation in the 5 GHz frequency band may be a band ranging from 5,150 GHz to 5,250 GHz (UNII-1) and a band ranging from 5,725 GHz to 5,825 GHz (UNII-3). For example, when an NAN electronic device is allowed to operate only on UNII-1 according to local regulations, a channel used for an NAN discovery operation may be channel 44 (5,220 GHz). In another example, when the NAN electronic device is allowed to operate only on UNII-3 according to local regulations, a channel used for the NAN discovery operation may be channel 149 (5,745 GHz). In yet another example, when the NAN electronic device is allowed to operate on both UNII-1 and UNII-3 according to local regulations, a channel used for the NAN discovery operation may be channel 149 (5,745 GHz).

According to an embodiment, when an electronic device (e.g., the electronic device 210) is not connected to a cellular network or fails to obtain a country code of the electronic device via another network, the electronic device may be used without the country code of the electronic device. For example, when the electronic device fails to obtain a country code, XZ, indicating an international region, may be set as a default country code.

The country code of the electronic device may be used by the electronic device to determine available wireless communication channels according to the local regulations of a region in which the electronic device is located. For example, the electronic device may use some of channels in the 2.4 GHz frequency band, the 5 GHz frequency band, and the 6 GHz frequency band as channels for Wi-Fi. The channels for Wi-Fi may vary depending on local regulations. Channels 1 to 11 (2,412 megahertz (MHz) to 2,462 MHz) in the 2.4 GHz frequency band are available for Wi-Fi in all regions (or countries). Thus, when the electronic device fails to obtain a country code or the electronic device uses XZ as the country code, the electronic device may use channels 1 to 11 for Wi-Fi.

The 2.4GHz frequency band has a narrow available bandwidth and is a band used by both Wi-Fi and Bluetooth, so a communication speed may be slow. Accordingly, a channel in the 5 GHz frequency band or the 6 GHz frequency band may be preferentially used as a Wi-Fi P2P operation channel or a channel used for an NAN data path.

According to an example, the electronic device that fails to obtain a country code may only use channels in the 2.4 GHz frequency band, so the electronic device may not detect another electronic device operating on a channel in the 5 GHz frequency band or 6 GHz frequency band.

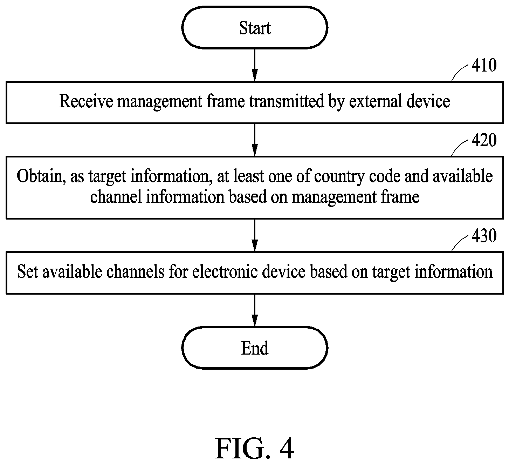

Hereinafter, with reference to FIGS. 4 to 13, detailed descriptions are given of a method performed by an electronic device to set an available channel of the electronic device using country information and available channel information obtained based on a management frame that the electronic device receives from another electronic device.

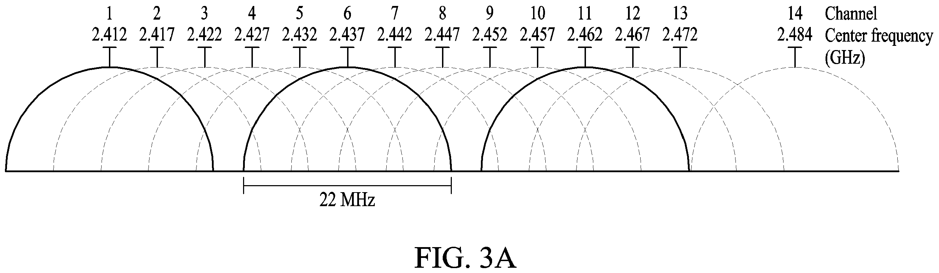

FIG. 3a illustrates channels in the 2.4 GHz band, according to an example.

According to an embodiment, 14 channels may be allocated to the 2.4 GHz band. Each of the channels in the 2.4 GHz band may have a 22 MHz bandwidth based on the center frequency of each of the channels. For example, channel 1 in the 2.4 GHz band may have a 22 MHz bandwidth with the center frequency of channel 1 being 2.412 MHz.

Active scanning may be performed on the channels in the 2.4 GHz band. The active scanning may include an operation in which an electronic device propagates a probe request to the vicinity of the electronic device and an operation in which the electronic device waits to receive a probe response to the probe request.

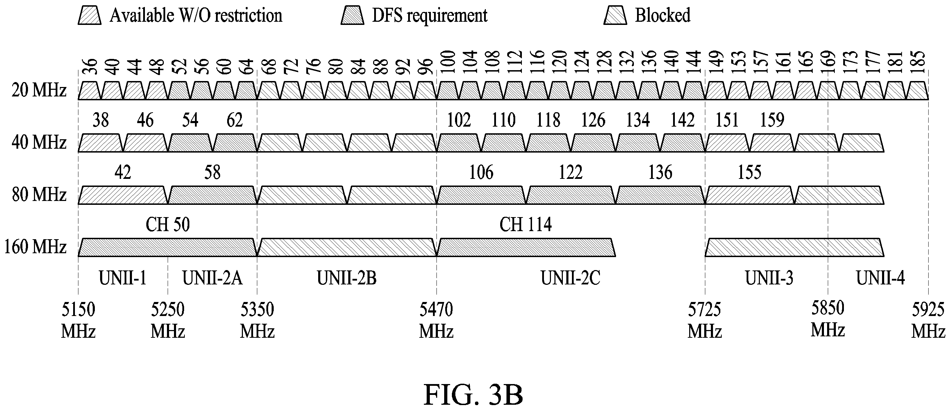

FIG. 3b illustrates channels in the 5 GHz band, according to an example.

According to an embodiment, channels with 20 MHz, 40 MHz, 80 MHz, and 160 MHz bandwidths may be allocated to the 5 GHz band. The channels may be classified according to the purpose of use. For example, the channels may be a channel available without restriction, a dynamic frequency selection (DFS)-requiring channel, and a blocked channel. The DFS-requiring channel may be a channel not available for the purpose of general communication when the channel is used for a designated purpose, such as a military radar, satellite communication, or a weather radar, and may be a channel available for the purpose of general communication when it is verified that the channel is not used for the designated purpose.

In the 5 GHz band, active scanning may be performed on channels 36, 40, 44, 48, 149, 153, 157, 161, and 165, which are WLAN channels, and passive scanning may be performed on channels 52, 56, 60, 64, 100, 104, 108, 112, 116, 120, 124, 128, 132, 136, 140, and 144, which are DFS channels.

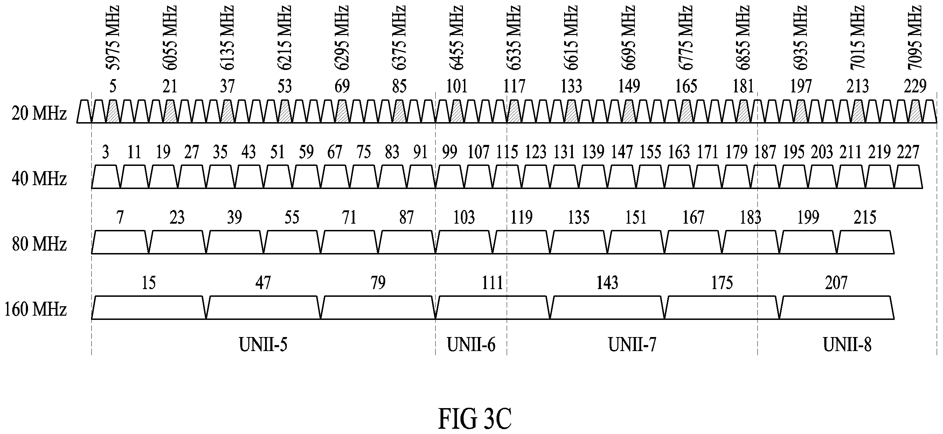

FIG. 3c illustrates channels in the 6 GHz band, according to an example.

According to an embodiment, channels with 20 MHz, 40 MHz, 80 MHz, and 160 MHz bandwidths may be allocated to the 6 GHz band. For example, the 6 GHz band may include some (e.g., a band after 5925 MHz) of the 5 GHz band and some (e.g., a band before 7125 MHz) of the 7 GHz band.

The channels with the 20 MHz bandwidth may be classified into a preferred scanning channel (PSC) or a non-PSC. The PSC may be a set of fifteen 20 MHz channels spaced apart from one another at an 80 MHz interval.

FIG. 4 is a flowchart of a method of setting available channels for an electronic device, according to various embodiments.

According to an embodiment, operations 410 to 430 may be performed by an electronic device (e.g., the electronic device 101 of FIG. 1 or the electronic device 210 of FIG. 2). The electronic device may include a communication module (e.g., the communication module 190 of FIG. 1) and a processor (e.g., the processor 120 of FIG. 1). For example, the electronic device may be one of a mobile communication terminal, a laptop, a personal computer (PC), a tablet terminal, and a wearable device.

In operation 410, the processor of the electronic device may receive a management frame transmitted by at least one external device (e.g., the electronic device 102 of FIG. 1 or the electronic device 220 of FIG. 2) using the communication module.

According to an embodiment, the electronic device and the external device may be devices (or terminals) operating in Wi-Fi P2P. For example, the management frame may be a frame exchanged between the devices in Wi-Fi P2P. For example, the management frame may include a probe request, a probe response, a GO negotiation response, a GO negotiation request, an invitation request, and an invitation response.

According to an embodiment, the electronic device and the external device may be devices (or terminals) operating in NAN. For example, the management frame may be a frame exchanged between the devices in NAN. For example, the management frame may include an NAN beacon frame, an SDF, a data path request, and an NAN frame.

In operation 420, the processor of the electronic device may obtain, as target information, at least one of a country code and available channel information based on the received management frame.

According to an embodiment, the processor may obtain a country code based on a country code field or a country string field included in the received management frame.

For example, country codes obtained based on a plurality of management frames received from a plurality of external devices may not be consistent. When the obtained country codes are not the same, a predetermined country code obtained from multiple external devices among the country codes may be determined as the target information.

According to an embodiment, the processor may obtain the available channel information based on a channel list attribute field or an availability attribute included in the received management frame.

In operation 430, the processor of the electronic device may set one or more available channels for the electronic device based on the target information.

For example, when a country code is obtained, Wi-Fi P2P channels or NAN channels allowed in a country corresponding to the country code may be set as the available channels. In another example, when the available channel information is obtained, channels appearing in the available channel information may be set as the available channels.

According to an embodiment, the available channels may be used for wireless communication for Wi-Fi P2P or NAN. For example, a target channel among the available channels may be used to set an operating channel or a data path channel.

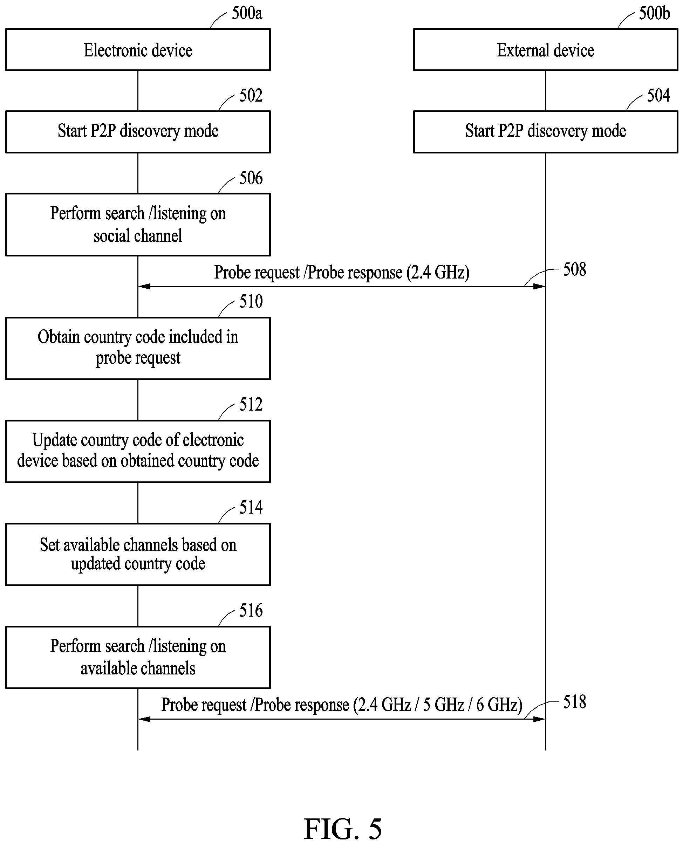

According to an embodiment, among operations of establishing a Wi-Fi P2P connection between the electronic device and the external device, operations 410 to 430 may be performed. Operations of establishing a Wi-Fi P2P connection between the electronic device and the external device are described below in detail with reference to FIGS. 5 to 9b.

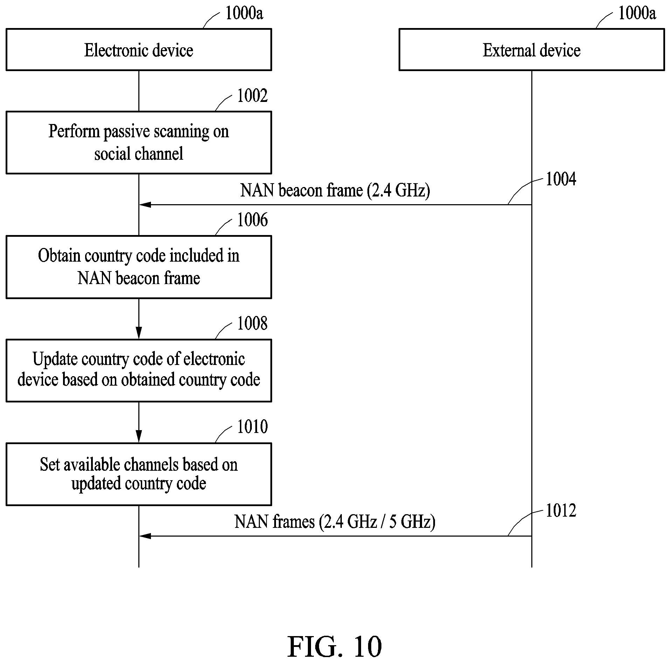

According to an embodiment, among operations of establishing an NAN connection between the electronic device and the external device, operations 410 to 430 may be performed. Operations of establishing an NAN connection between the electronic device and the external device are described below in detail with reference to FIGS. 10 to 13.

FIG. 5 is a signal flowchart of a method of setting available channels of an electronic device based on a probe request transmitted by an external device, according to various embodiments.

According to an embodiment, operations 502 to 518 may be performed by an electronic device 500a (e.g., the electronic device 101 of FIG. 1 or the electronic device 210 of FIG. 2) and an external device 500b (e.g., the electronic device 102 of FIG. 1 or the electronic device 220 of FIG. 2).

According to an embodiment, the electronic device 500a, before operation 502 is performed, may be a device with its country code set to a default country code.

In operation 502, the electronic device 500a may start a P2P discovery mode. For example, when an application (or a program) using Wi-Fi P2P is executed on the electronic device 500a, the P2P discovery mode may start. In another example, when a trigger is input through a WSC button, the P2P discovery mode may start.

In operation 504, the external device 500b may start the P2P discovery mode.

In operation 506, the electronic device 500a may perform a search and/or listening on a social channel. For example, the social channel may include at least one of channels 1, 6, and 11 in the 2.4 GHz band.

In operation 508, a probe request and a probe response may be exchanged between the electronic device 500a and the external device 500b on the social channel. For example, the probe request may include a country code and the probe response may not include a country code.

According to an embodiment, operation 508 in which the electronic device 500a receives a probe request from the external device 500b may correspond to operation 410 described above with reference to FIG. 4.

In operation 510, the electronic device 500a may obtain a country code included in the probe request received from the external device 500b. For example, an operating channel attribute included in the probe request may include a country string, which is a parameter, and the electronic device 500a may obtain a country code corresponding to the country string.

According to an embodiment, operation 510 in which the electronic device 500a obtains a country code may correspond to operation 420 described above with reference to FIG. 4.

In operation 512, the electronic device 500a may update the country code of the electronic device 500a based on the obtained country code. For example, when the obtained country code is US, the electronic device 500a may update the country code from XZ to US.

According to an embodiment, the electronic device 500a may change the country code to the obtained country code when the country code set on the electronic device 500a is XZ (corresponding to a worldwide value), a default value, or left blank.

In operation 514, the electronic device 500a may set available channels based on the updated country code. For example, when the country code of the electronic device 500a is updated to US, the electronic device 500a may set, as available channels, channels allowed for Wi-Fi P2P in the United States. For example, the available channels may be at least some of channels in the 2.4 GHz band, 5 GHz band, and 6 GHz band.

According to an embodiment, operation 514 in which the electronic device 500a sets the available channels based on the updated country code may correspond to operation 430 described above with reference to FIG. 4.

In operation 516, the electronic device 500a may perform searching and/or listening on the set available channels. A probe request and a probe response may be exchanged between the electronic device 500a and the external device 500b on the available channels.

According to an embodiment, the electronic device 500a and the external device 500b may establish an association on at least one target channel among the available channels and operate based on the associated target channel.

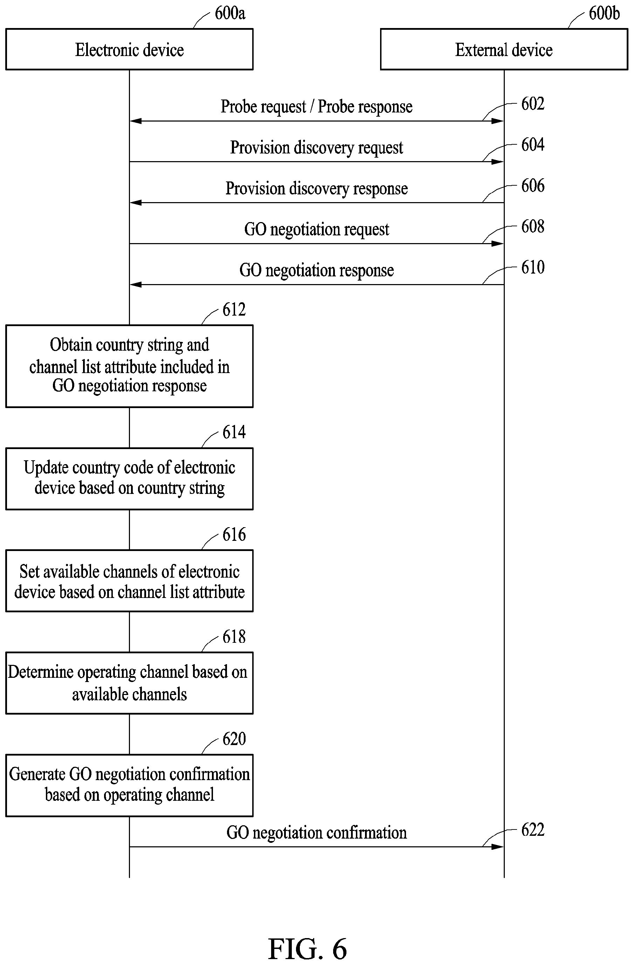

FIG. 6 is a signal flowchart of a method of setting available channels of an electronic device based on a GO negotiation response transmitted by an external device, according to various embodiments.

According to an embodiment, operations 602 to 622 may be performed by an electronic device 600a (e.g., the electronic device 101 of FIG. 1 or the electronic device 210 of FIG. 2) and an external device 600b (e.g., the electronic device 102 of FIG. 1 or the electronic device 220 of FIG. 2).

According to an embodiment, the electronic device 600a, before operation 602 is performed, may be a device with its country code set to a default country code.

In operation 602, a probe request and a probe response may be exchanged between the electronic device 600a and the external device 600b. For example, the probe request and the probe response may be exchanged on a social channel.

In operation 604, the electronic device 600a may transmit a provision discovery request to the external device 600b.

In operation 606, the external device 600b may transmit, to the electronic device 600a, a provision discovery response to the provision discovery request.

According to an embodiment, operations 604 and 606 may be optionally performed.

In operation 608, the electronic device 600a may transmit a GO negotiation request to the external device 600b.

In operation 610, the external device 600b may transmit, to the electronic device 600a, a GO negotiation response to the GO negotiation request.

According to an embodiment, operation 610 in which the electronic device 600a receives the GO negotiation response from the external device 600b may correspond to operation 410 described above with reference to FIG. 4.

In operation 612, the electronic device 600a may obtain a country string and a channel list attribute included in the GO negotiation response.

According to an embodiment, operation 612 in which the electronic device 600a obtains the country string and the channel list attribute may correspond to operation 420 described above with reference to FIG. 4.

In operation 614, the electronic device 600a may update the country code of the electronic device 600a based on the country string. One or more available channels of the electronic device 600a may be set based on the updated country code.

According to an embodiment, operation 614 in which the electronic device 600a sets the available channels based on the updated country code may correspond to operation 430 described above with reference to FIG. 4.

In operation 616, the electronic device 600a may set one or more available channels of the electronic device 600a based on the channel list attribute. For example, the electronic device 600a may set (or update) one or more available channels of the electronic device 600a based on one or more operating classes and channel lists in the channel list attribute. Here, the operating classes may be values for distinguishing between channels in Wi-Fi by associating the channels with bandwidths.

According to an embodiment, operation 616 in which the electronic device 600a sets available channels based on the channel list attribute may correspond to operation 430 described above with reference to FIG. 4.

In operation 618, the electronic device 600a may determine an operating channel with the external device 600b based on the set available channels.

In operation 620, the electronic device 600a may generate a GO negotiation confirmation based on the operating channel.

In operation 622, the electronic device 600a may transmit the GO negotiation confirmation to the external device 600b.

According to an embodiment, the electronic device 600a and the external device 600b may perform the remaining procedures for P2P connection using the operating channel.

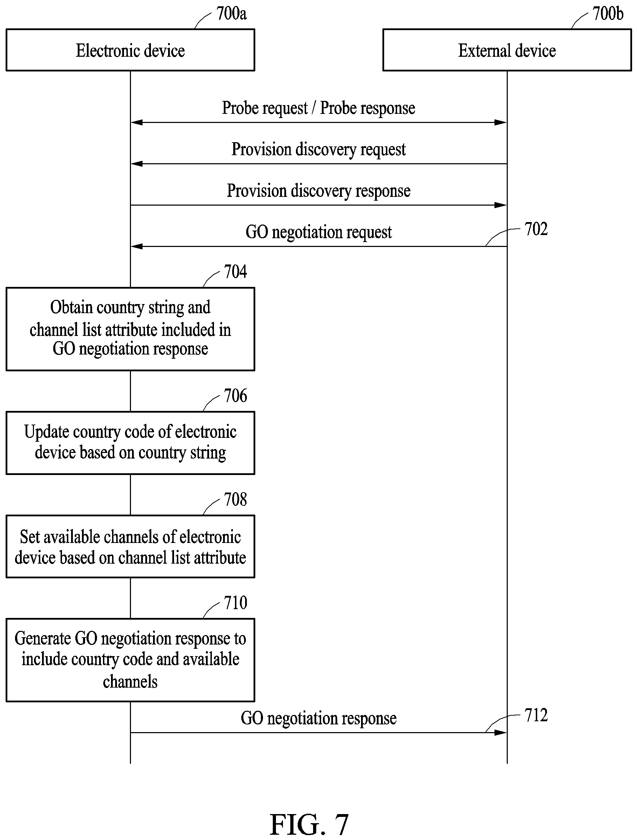

FIG. 7 is a signal flowchart of a method of setting available channels of an electronic device based on a GO negotiation request transmitted by an external device, according to various embodiments.

According to an embodiment, operations 702 to 712 may be performed by an electronic device 700a (e.g., the electronic device 101 of FIG. 1 or the electronic device 210 of FIG. 2) and an external device 700b (e.g., the electronic device 102 of FIG. 1 or the electronic device 220 of FIG. 2).

According to an embodiment, the electronic device 700a, before operation 702 is performed, may be a device with its country code set to a default country code.

Before operation 702 is performed, a probe request, a probe response, a provision discovery request, and a provision discovery response may be exchanged between the electronic device 700a and the external device 700b.

In operation 702, the electronic device 700a may receive a GO negotiation request from the external device 700b.

According to an embodiment, operation 702 in which the electronic device 700a receives the GO negotiation request from the external device 700b may correspond to operation 410 described above with reference to FIG. 4.

In operation 704, the electronic device 700a may obtain a country string and a channel list attribute included in the GO negotiation request.

According to an embodiment, operation 704 in which the electronic device 700a obtains the country string and the channel list attribute may correspond to operation 420 described above with reference to FIG. 4.

In operation 706, the electronic device 700a may update the country code of the electronic device 700a based on the country string. One or more available channels of the electronic device 700a may be set based on the updated country code.

According to an embodiment, operation 706 in which the electronic device 700a sets the available channels based on the updated country code may correspond to operation 430 described above with reference to FIG. 4.

In operation 708, the electronic device 700a may set one or more available channels of the electronic device 700a based on the channel list attribute. For example, the electronic device 700a may set (or update) one or more available channels of the electronic device 700a based on one or more operating classes and channel lists in the channel list attribute.

According to an embodiment, operation 708 in which the electronic device 700a sets available channels based on the channel list attribute may correspond to operation 430 described above with reference to FIG. 4.

In operation 710, the electronic device 700a may generate a GO negotiation response to include the country code and available channels of the electronic device 700a.

In operation 712, the electronic device 700a may transmit the GO negotiation response to the external device 700b.

According to an embodiment, the electronic device 700a and the external device 700b may determine an operating channel through a GO negotiation and perform the remaining procedures for P2P connection using the operating channel.

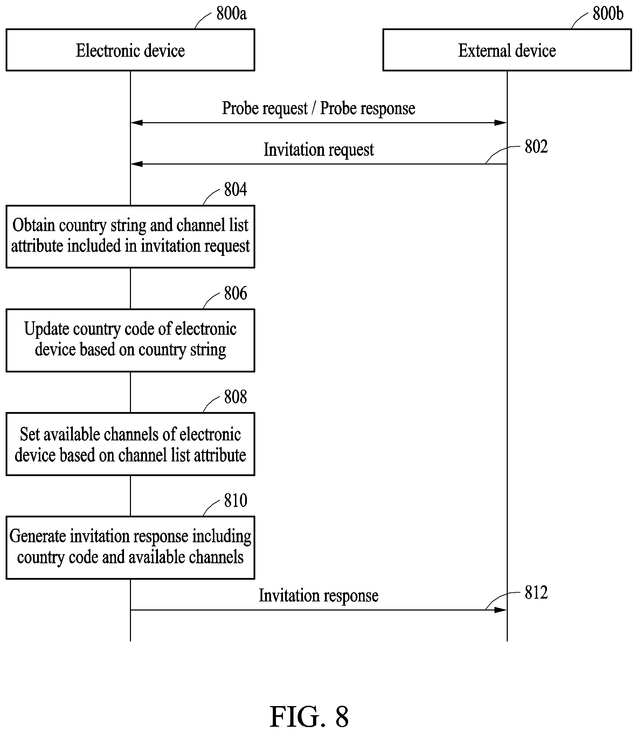

FIG. 8 is a signal flowchart of a method of setting available channels of an electronic device based on an invitation request transmitted by an external device, according to various embodiments.

According to an embodiment, operations 802 to 812 may be performed by an electronic device 800a (e.g., the electronic device 101 of FIG. 1 or the electronic device 210 of FIG. 2) and an external device 800b (e.g., the electronic device 102 of FIG. 1 or the electronic device 220 of FIG. 2).

According to an embodiment, the electronic device 800a, before operation 802 is performed, may be a device with its country code set to a default country code.

For example, before operation 802 is performed, a probe request and a probe response may be exchanged between the electronic device 800a and the external device 800b. In another example, when there is a record of a previous connection between the electronic device 800a and the external device 800b, the probe request and the probe response may not be exchanged therebetween. In another example, the external device 800b may identify the electronic device 800a through a Bluetooth low energy (BLE) communication protocol rather than Wi-Fi P2P.

In operation 802, the electronic device 800a may receive an invitation request from the external device 800b that detects (or identifies) the electronic device 800a. For example, the invitation request may be a P2P invitation request.

According to an embodiment, operation 802 in which the electronic device 800a receives an invitation request from the external device 800b may correspond to operation 410 described above with reference to FIG. 4.

In operation 804, the electronic device 800a may obtain a country string and a channel list attribute included in the invitation request.

According to an embodiment, operation 804 in which the electronic device 800a obtains the country string and the channel list attribute may correspond to operation 420 described above with reference to FIG. 4.

In operation 806, the electronic device 800a may update the country code of the electronic device 800a based on the country string. One or more available channels of the electronic device 800a may be set based on the updated country code.

According to an embodiment, operation 806 in which the electronic device 800a sets the available channels based on the updated country code may correspond to operation 430 described above with reference to FIG. 4.

In operation 808, the electronic device 800a may set one or more available channels of the electronic device 800a based on the channel list attribute. For example, the electronic device 800a may set (or update) one or more available channels of the electronic device 800a based on one or more operating classes and channel lists in the channel list attribute.

According to an embodiment, operation 808 in which the electronic device 800a sets available channels based on the channel list attribute may correspond to operation 430 described above with reference to FIG. 4.

In operation 810, the electronic device 800a may generate an invitation response to include the country code and available channels of the electronic device 800a.

In operation 812, the electronic device 800a may transmit the invitation response to the external device 800b.

According to an embodiment, the electronic device 800a and the external device 800b may perform the remaining procedures for P2P connection using a target channel among the available channels.

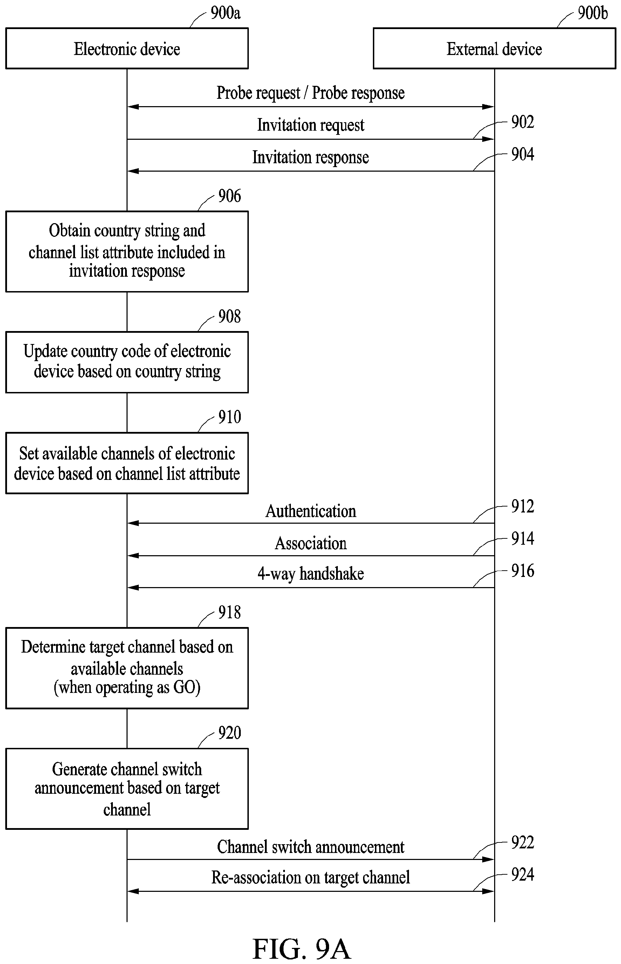

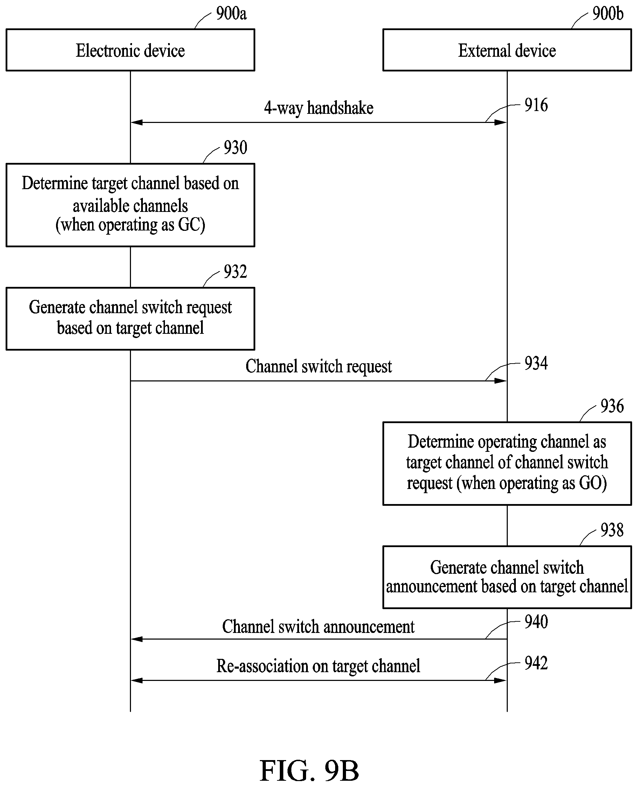

FIGS. 9a and 9b are signal flowcharts of a method of setting available channels of an electronic device based on an invitation response transmitted by an external device, according to various embodiments.

According to an embodiment, operations 902 to 942 may be performed by an electronic device 900a (e.g., the electronic device 101 of FIG. 1 or the electronic device 210 of FIG. 2) and an external device 900b (e.g., the electronic device 102 of FIG. 1 or the electronic device 220 of FIG. 2).

When the electronic device 900a operates as a GO, operations 918 to 924 illustrated in FIG. 9a may be performed. On the other hand, when the electronic device 900a operates as a GC, operations 930 to 942 illustrated in FIG. 9b may be performed.

According to an embodiment, the electronic device 900a, before operation 902 is performed, may be a device with its country code set to a default country code.

For example, before operation 902 is performed, a probe request and a probe response may be exchanged between the electronic device 900a and the external device 900b. In another example, when there is a record of a previous connection between the electronic device 900a and the external device 900b, the probe request and the probe response may not be exchanged. In another example, the electronic device 900a may identify the external device 900b through a BLE communication protocol rather than Wi-Fi P2P.

In operation 902, the electronic device 900a may transmit an invitation request to the external device 900b. For example, the invitation request may be a P2P invitation request.

In operation 904, the electronic device 900a may receive an invitation response to the invitation request transmitted to the external device 900b.

According to an embodiment, operation 906 in which the electronic device 900a receives an invitation response from the external device 900b may correspond to operation 410 described above with reference to FIG. 4.

In operation 906, the electronic device 900a may obtain a country string and a channel list attribute included in the invitation response.

According to an embodiment, operation 906 in which the electronic device 900a obtains the country string and the channel list attribute may correspond to operation 420 described above with reference to FIG. 4.

In operation 908, the electronic device 900a may update the country code of the electronic device 900a based on the country string. One or more available channels of the electronic device 900a may be set based on the updated country code.

According to an embodiment, operation 908 in which the electronic device 900a sets the available channels based on the updated country code may correspond to operation 430 described above with reference to FIG. 4.

In operation 910, the electronic device 900a may set one or more available channels of the electronic device 900a based on the channel list attribute. For example, the electronic device 900a may set (or update) one or more available channels of the electronic device 900a based on one or more operating classes and channel lists in the channel list attribute.

According to an embodiment, operation 910 in which the electronic device 900a sets available channels based on the channel list attribute may correspond to operation 430 described above with reference to FIG. 4.

Although operation 912 is illustrated as being performed after operations 906 to 908 are performed, operation 912 may be performed in parallel to or independently of operations 906 to 908.

In operation 912, authentication may be established between the electronic device 900a and the external device 900b.

In operation 914, an association may be established between the electronic device 900a and the external device 900b.

In operation 916, a 4-way handshake may be performed between the electronic device 900a and the external device 900b.

### <When the electronic device 900a operates as a GO>

In operation 918, when the electronic device 900a operates as a GO, the electronic device 900a may determine a target channel based on the set available channels. For example, the electronic device 900a may determine, as the target channel, a channel that is the most advantageous to communication among available channels. The target channel may be used as an operating channel for P2P connection.

In operation 920, the electronic device 900a may generate a channel switch announcement based on the target channel.

In operation 922, the electronic device 900a may transmit the channel switch announcement to the external device 900b.

In operation 924, a re-association based on the target channel may be established between the electronic device 900a and the external device 900b.

### <When the electronic device 900a operates as a GC>

In operation 930, when the electronic device 900a operates as a GC, the electronic device 900a may determine a target channel based on the set available channels. For example, the electronic device 900a may determine, as the target channel, a channel that is the most advantageous to communication among available channels. The target channel may be used as an operating channel for P2P connection.

In operation 932, the electronic device 900a may generate a channel switch request based on the target channel. The channel switch request may be an action frame.

In operation 934, the electronic device 900a may transmit the channel switch request to the external device 900b operating as a GO.

In operation 936, the external device 900b may determine an operating channel as the target channel of the channel switch request.

In operation 938, the external device 900b may generate a channel switch announcement based on the target channel.

In operation 940, the electronic device 900a may receive the channel switch announcement from the external device 900b.

In operation 942, a re-association based on the target channel may be established between the electronic device 900a and the external device 900b.

FIG. 10 is a signal flowchart of a method of setting available channels of an electronic device based on an NAN beacon frame transmitted by an external device, according to various embodiments.

According to an embodiment, operations 1002 to 1004 may be performed by an electronic device 1000a (e.g., the electronic device 101 of FIG. 1 or the electronic device 210 of FIG. 2) and an external device 1000b (e.g., the electronic device 102 of FIG. 1 or the electronic device 220 of FIG. 2).

According to an embodiment, the electronic device 1000a, before operation 1002 is performed, may be a device with its country code set to a default country code.

In operation 1002, the electronic device 1000a may perform passive scanning on a social channel. For example, the social channel may include at least one of channels 1, 6, and 11 in the 2.4 GHz band.

In operation 1004, the electronic device 1000a may receive an NAN beacon frame from the external device 1000b.

According to an embodiment, operation 1004 in which the electronic device 1000a receives the NAN beacon frame from the external device 1000b may correspond to operation 410 described above with reference to FIG. 4.

In operation 1006, the electronic device 1000a may obtain a country code included in the NAN beacon frame. For example, the electronic device 1000a may obtain a country code based on a condensed country string, which is a parameter included in the country code attribute of the NAN beacon frame.

According to an embodiment, operation 1006 in which the electronic device 1000a obtains a country code may correspond to operation 420 described above with reference to FIG. 4.

In operation 1008, the electronic device 1000a may update the country code of the electronic device 1000a based on the obtained country code. For example, when the obtained country code is US, the electronic device 1000a may update the country code from XZ to US.

In operation 1010, the electronic device 1000a may set available channels based on the updated country code. For example, when the country code of the electronic device 1000a is updated to US, the electronic device 1000a may set, as available channels, channels allowed for NAN in the United States. For example, the available channels may be at least some of channels in the 2.4 GHz band and the 5 GHz band.

According to an embodiment, operation 1010 in which the electronic device 1000a sets the available channels based on the updated country code may correspond to operation 430 described above with reference to FIG. 4.

In operation 1012, the electronic device 1000a may exchange NAN frames with the external device 1000b using expanded available channels. For example, the NAN frames may include an NAN beacon frame, an SDF, and an NAF and are not limited to the described embodiments.

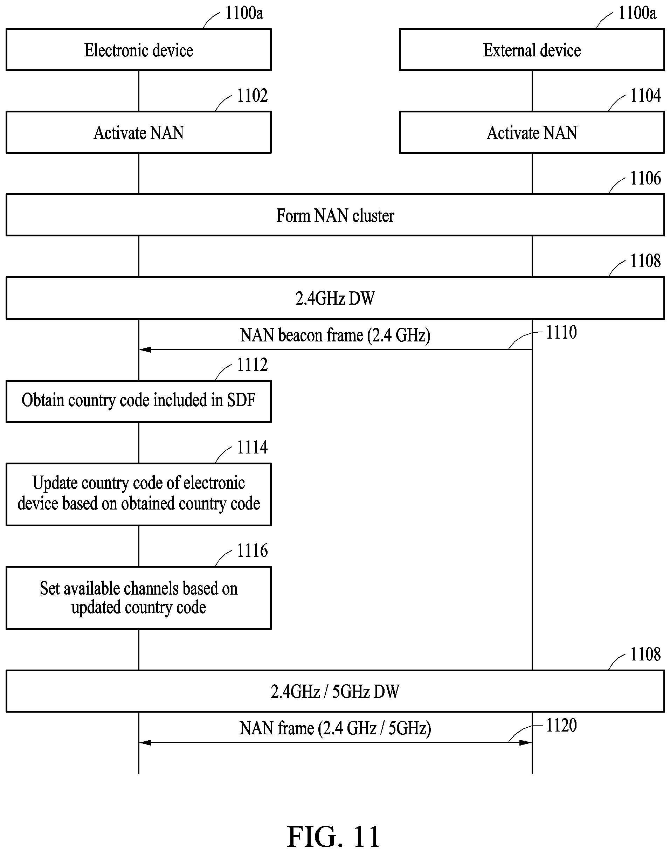

FIG. 11 is a signal flowchart of a method of setting available channels of an electronic device based on an SDF transmitted by an external device, according to various embodiments.

According to an embodiment, operations 1102 to 1120 may be performed by an electronic device 1100a (e.g., the electronic device 101 of FIG. 1 or the electronic device 210 of FIG. 2) and an external device 1100b (e.g., the electronic device 102 of FIG. 1 or the electronic device 220 of FIG. 2).

According to an embodiment, the electronic device 1100a, before operation 1102 is performed, may be a device with its country code set to a default country code.

In operation 1102, the electronic device 1100a may activate NAN. For example, when an application (or a program) that uses the NAN is executed on the electronic device 1000a, the NAN may be activated. In another example, the NAN may be activated by a trigger to activate NAN.

In operation 1104, the external device 1100b may activate the NAN.

In operation 1106, the electronic device 1100a and the external device 1100b may form an NAN cluster. For example, the NAN cluster may be formed based on a social channel.

In operation 1108, the electronic device 1100a and the external device 1100b may operate in a DW in the 2.4 GHz band.

In operation 1110, the electronic device 1100a may receive an SDF from the external device 1100b. For example, the SDF may be a publish frame. In another example, the SDF may be a subscribe frame.

According to an embodiment, operation 1110 in which the electronic device 1100a receives an SDF from the external device 1100b may correspond to operation 410 described above with reference to FIG. 4.

In operation 1112, the electronic device 1100a may obtain a country code included in the SDF. For example, the electronic device 1100a may obtain the country code based on a condensed country string, which is a parameter included in a country code attribute of the SDF.

According to an embodiment, operation 1112 in which the electronic device 1100a obtains a country code may correspond to operation 420 described above with reference to FIG. 4.

In operation 1114, the electronic device 1100a may update the country code of the electronic device 1100a based on the obtained country code. For example, when the obtained country code is US, the electronic device 1100a may update the country code from XZ to US.

In operation 1116, the electronic device 1100a may set available channels based on the updated country code. For example, when the country code of the electronic device 1100a is updated to US, the electronic device 1100a may set, as available channels, channels allowed for NAN in the United States. For example, the available channels may be at least some of channels in the 2.4 GHz band and the 5 GHz band.

According to an embodiment, operation 1116 in which the electronic device 1100a sets the available channels based on the updated country code may correspond to operation 430 described above with reference to FIG. 4.

In operation 1118, the electronic device 1100a and the external device 1100b may operate in a DW in the 2.4 GHz band and/or the 5 GHz band using expanded available channels.

In operation 1120, the electronic device 1100a may exchange NAN frames with the external device 1100b using the expanded available channels.

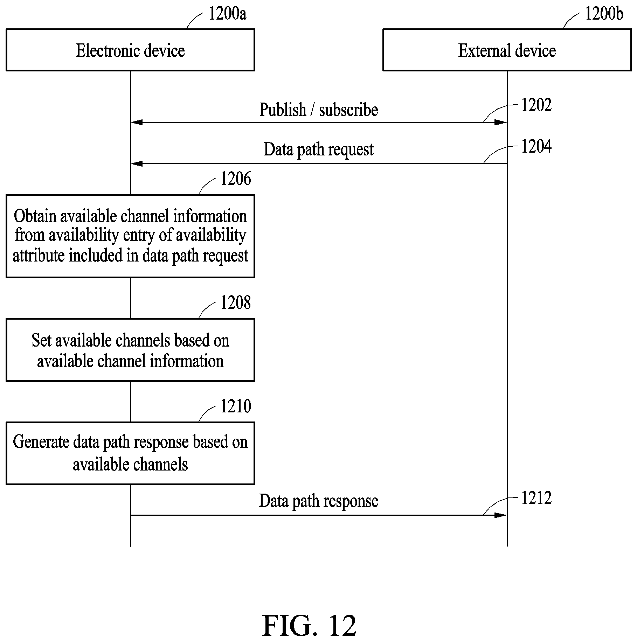

FIG. 12 is a signal flowchart of a method of setting available channels of an electronic device based on a data path request transmitted by an external device, according to various embodiments.

According to an embodiment, operations 1202 to 1212 may be performed by an electronic device 1200a (e.g., the electronic device 101 of FIG. 1 or the electronic device 210 of FIG. 2) and an external device 1200b (e.g., the electronic device 102 of FIG. 1 or the electronic device 220 of FIG. 2).

According to an embodiment, the electronic device 1200a, before operation 1202 is performed, may be a device with its country code set to a default country code.

In operation 1202, a publish frame and a subscribe frame may be exchanged between the electronic device 1200a and the external device 1200b.

In operation 1204, the electronic device 1200a may receive a data path request from the external device 1200b.

According to an embodiment, operation 1204 in which the electronic device 1200a receives the data path request from the external device 1200b may correspond to operation 410 described above with reference to FIG. 4.

In operation 1206, the electronic device 1200a may obtain available channel information from availability entries of an availability attribute included in the data path request. For example, the electronic device 1200a may obtain, as available channel information, one or more of an operating class, a channel bitmap, a primary channel bitmap, and an auxiliary channel bitmap included in a band/channel entry list of the availability entries.

According to an embodiment, operation 1206 in which the electronic device 1200a obtains the available channel information may correspond to operation 420 described above with reference to FIG. 4.

In operation 1208, the electronic device 1200a may set available channels of the electronic device 1200a based on the available channel information.

According to an embodiment, operation 1208 in which the electronic device 1200a sets the available channels based on the available channel information may correspond to operation 430 described above with reference to FIG. 4.

In operation 1210, the electronic device 1200a may generate a data path response based on the available channels. For example, a data path response may be generated to reveal available channels.

In operation 1212, the electronic device 1200a may transmit the data path response to the external device 1200b.

According to an embodiment, the electronic device 1200a and the external device 1200b may perform the remaining procedures for forming a data path using the available channels.

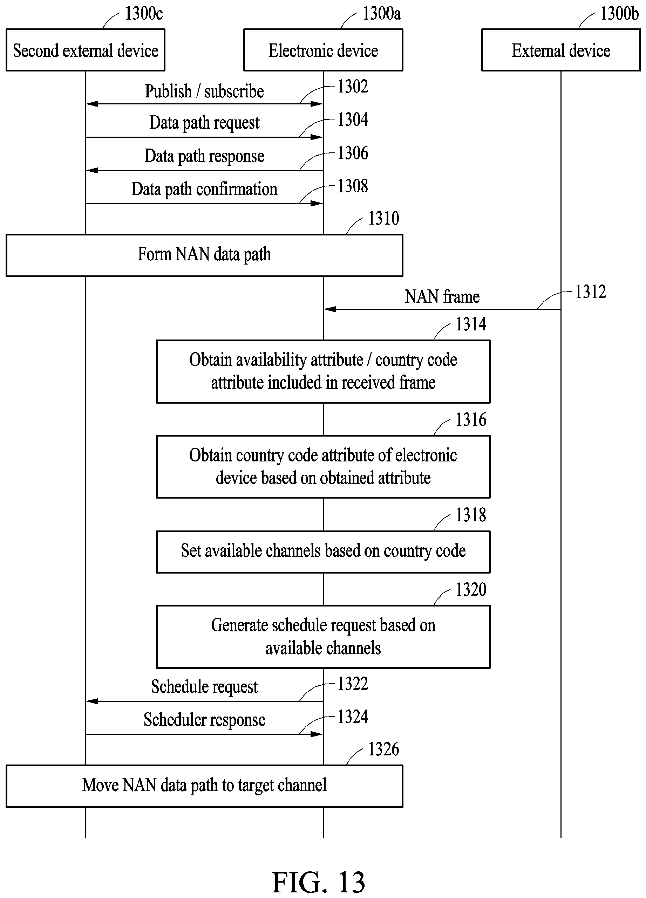

FIG. 13 is a signal flowchart of a method of setting available channels based on an NAN frame received by an electronic device from an external device and moving an NAN data path to another path based on the available channels, wherein the NAN data path is formed between the electronic device and another external device.

According to an embodiment, operations 1302 to 1326 may be performed by an electronic device 1300a (e.g., the electronic device 101 of FIG. 1 or the electronic device 210 of FIG. 2), an external device 1300b (e.g., the electronic device 102 of FIG. 1 or the electronic device 220 of FIG. 2), and a second external device 1300c (e.g., the electronic device 104 of FIG. 1 or the electronic device 230 of FIG. 2).

According to an embodiment, the electronic device 1300a, before operation 1302 is performed, may be a device with its country code set to a default country code.

In operation 1302, a publish frame and a subscribe frame may be exchanged between the electronic device 1300a and the second external device 1300c.

In operation 1304, the electronic device 1300a may receive a data path request from the second external device 1300c.

In operation 1306, the electronic device 1300a may transmit a data path response to the second external device 1300c.

In operation 1308, the electronic device 1300a may receive a data path confirmation from the second external device 1300c.

In operation 1310, an NAN data path may be formed between the electronic device 1300a and the second external device 1300c.

In operation 1312, the electronic device 1300a may receive an NAN frame from the external device 1300b. For example, the NAN frames may include an NAN beacon frame, an SDF, and an NAF and are not limited to the described embodiments.

According to an embodiment, operation 1312 in which the electronic device 1300a receives the NAN frame from the external device 1300b may correspond to operation 410 described above with reference to FIG. 4.

In operation 1314, the electronic device 1300a may obtain one or more of an availability attribute and a country code attribute included in the NAN frame. For example, the electronic device 1300a may obtain available channel information from availability entries of the availability attribute. For example, the electronic device 1300a may obtain, as the available channel information, one or more of an operating class and a channel bitmap based on the availability entries. For example, the electronic device 1300a may obtain a country code based on a condensed country string, which is a parameter included in the country code attribute of the NAN beacon frame.

According to an embodiment, operation 1314 in which the electronic device 1300a obtains one or more of the available channel information and the country code may correspond to operation 420 described above with reference to FIG. 4.

In operation 1316, the electronic device 1300a may update the country code of the electronic device 1300a based on one or more of the availability attribute and the country code attribute.

In operation 1318, the electronic device 1300a may set available channels based on one or more of the available channel information and the country code.

According to an embodiment, operation 1318 in which the electronic device 1300a sets the available channels may correspond to operation 430 described above with reference to FIG. 4

In operation 1320, the electronic device 1300a may generate a schedule request based on the available channels.

In operation 1322, the electronic device 1300a may transmit the schedule request to the second external device 1300c.

In operation 1324, the electronic device 1300a may receive a schedule response from the second external device 1300c. For example, the schedule response may include a target channel selected from among the available channels by the second external device 1300c.

In operation 1326, the electronic device 1300a and the second external device 1300c may move the NAN data path to the target channel.

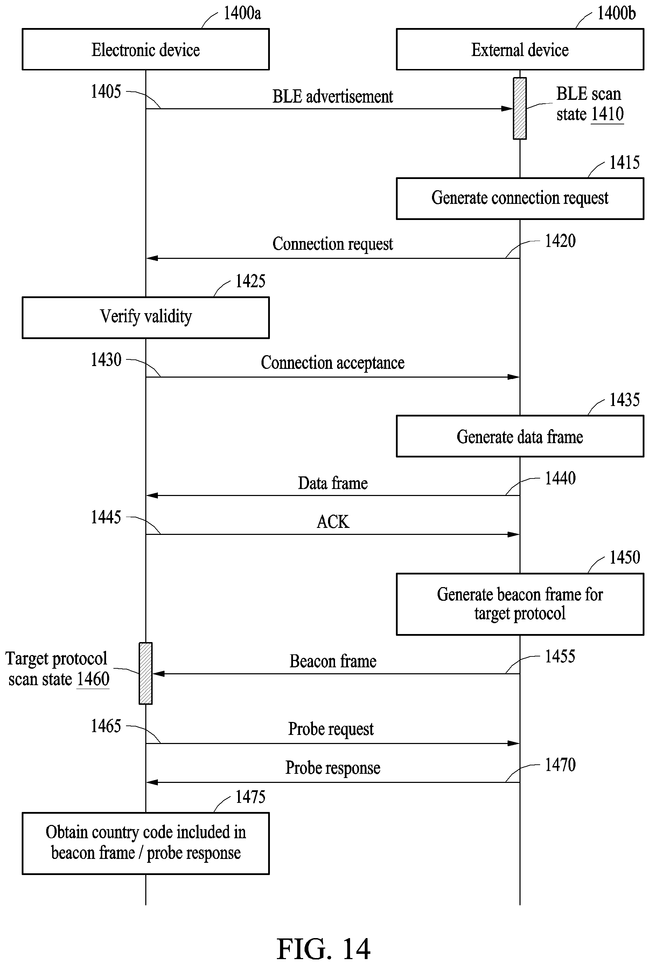

FIG. 14 is a signal flowchart of a method in which an electronic device connected to an external device via a BLE network obtains a country code based on a data frame received via the BLE network.

According to an embodiment, operations 1405 to 1475 may be performed by an electronic device 1400a (e.g., the electronic device 101 of FIG. 1 or the electronic device 210 of FIG. 2) and an external device 1400b (e.g., the electronic device 102 of FIG. 1 or the electronic device 220 of FIG. 2).

According to an embodiment, the electronic device 1400a, before operation 1405 is performed, may be a device with its country code set to a default country code.

In operation 1405, the electronic device 1400a may transmit, to the external device 1400b, a BLE advertisement for a BLE network. The electronic device 1400a may generate a personal identification number (PIN) for BLE connection after transmitting the BLE advertisement.

In operation 1410, the external device 1400b may receive the BLE advertisement transmitted by the electronic device 1400a when the external device 1400b operates in a BLE scan state.

In operation 1415, the external device 1400b may generate a connection request for BLE connection. For example, the external device 1400b may generate a connection request to include a PIN received from a user.

In operation 1420, the external device 1400b may transmit the connection request to the electronic device 1400a.

In operation 1425, the electronic device 1400a may verify the validity of the connection request based on the PIN of the connection request. When the PIN included in the connection request is the same as the PIN set on the electronic device 1400a, the validity of the connection request may be verified. When the validity of the connection request is verified, the electronic device 1400a may determine that the external device 1400b is a trusted device.

In operation 1430, when the validity of the connection request is verified, the electronic device 1400a may transmit connection acceptance to the external device 1400b. After operation 1430 is performed, the electronic device 1400a may pair with the external device 1400b via the BLE network.

In operation 1435, the external device 1400b may generate a data frame that may be transmitted via the BLE network.

According to an embodiment, the data frame may include information about target topology, in which the electronic device 1400a becomes a Wi-Fi soft-AP (or a master) and the external device 1400b becomes a client (or a slave), as well as operating channel information for the target topology.

According to an embodiment, the data frame may include information about a target protocol such as a Wi-Fi communication protocol (e.g., a Wi-Fi P2P communication protocol and an NAN communication protocol) and may include operating channel information for the target protocol.

According to another embodiment, the data frame may include at least one of a country string indicating a country code set on the external device 1400b and a channel list attribute.

In operation 1440, the external device 1400b may transmit the data frame to the electronic device 1400a via the BLE network.

In operation 1445, when the data frame is normally received, the electronic device 1400a may transmit an acknowledgement to the external device 1400b.

According to an embodiment, when at least one of the country string and the channel list attribute is included in the data frame, the electronic device 1400a may obtain, as target information, at least one of a country code and available channel information based on at least one of the country string and the channel list attribute. According to the embodiment described above, operations 1450 to 1475 may not be performed.

In operation 1450, the external device 1400b may generate a beacon frame for the target protocol when the ACK is received from the electronic device 1400a.

In operation 1455, the external device 1400b may transmit the beacon frame to the electronic device 1400a. The beacon frame may be transmitted through an operating channel for the target protocol.

In operation 1460, the electronic device 1400a may receive the beacon frame transmitted by the external device 1400b when the electronic device 1400a operates in a scan state of the target protocol. For example, the electronic device 1400a may receive the beacon frame by performing active scanning on an operating channel. In another example, when it is unclear whether the operating channel is supported by a corresponding country, the electronic device 1400a may receive the beacon frame by performing passive scanning on the operating channel.

In operation 1465, when the country information of the beacon frame is obtained and the operating channel is one that may be supported by the country of the country information, the electronic device 1400a may transmit a probe request to the external device 1400b.

In operation 1470, the external device 1400b may transmit, to the electronic device 1400a, a probe response to the probe request.

According to an embodiment, after operation 1470 is performed, additional operations may be further performed to perform connection to the target protocol.

In operation 1475, the electronic device 1400a may obtain the country code (or country information) included in the beacon frame or the probe response. The electronic device 1400a may update (e.g., operation 512 of FIG. 5) the country code of the electronic device 1400a based on the obtained country code.

According to an embodiment, when the target protocol is for topology in which the electronic device 1400a becomes a soft-AP (or a master), the beacon frame or the probe response of the target protocol may include a country code (or country information).

According to an embodiment, an electronic device (e.g., the electronic device 101 of FIG. 1, the electronic device 210 of FIG. 2, the electronic device 500a of FIG. 5, the electronic device 600a of FIG. 6, the electronic device 700a of FIG. 7, the electronic device 800a of FIG. 8, the electronic device 900a of FIGS. 9a and 9b, the electronic device 1000a of FIG. 10, the electronic device 1100a of FIG. 11, the electronic device 1200a of FIG. 12, and the electronic device 1300a of FIG. 13) may include a communication module (e.g., the communication module 190 of FIG. 1) for exchanging data with an external device (e.g., the electronic device 102 of FIG. 1, the electronic device 220 of FIG. 2, the external device 500b of FIG. 5, the external device 600b of FIG. 6, the external device 700b of FIG. 7, the external device 800b of FIG. 8, the external device 900b of FIGS. 9a and 9b, the external device 1000b of FIG. 10, the external device 1100b of FIG. 11, the external device 1200b of FIG. 12, and the external device 1300b of FIG. 13) and at least one processor (e.g., the processor 120 of FIG. 1) for controlling the electronic device, wherein the processor may receive a management frame transmitted by the external device using the communication module, obtain, as target information, at least one of a country code and available channel information based on the management frame, and set one or more available channels for the electronic device based on the obtained target information.

According to an embodiment, the management frame may be received through a social channel in a 2.4 GHz band.

According to an embodiment, the management frame may be either a probe request or a probe response.

According to an embodiment, the processor may perform a search and listening on one or more available channels using the communication module.

According to an embodiment, the management frame may be a GO negotiation request or a GO negotiation response.

According to an embodiment, when the management frame is a GO negotiation response, the processor may obtain, as target information, a country string and a channel list attribute included in the GO negotiation response, update a country code of the electronic device based on the country string, set one or more available channels for the electronic device based on the channel list attribute, determine an operating channel based on the set available channels, generate a GO negotiation confirmation based on the operating channel, and transmit the GO negotiation confirmation using the communication module.

According to an embodiment, the management frame may be an invitation request or an invitation response.

According to an embodiment, when the management frame is an invitation request, the processor may obtain, as target information, a country string and a channel list attribute included in the invitation request, update a country code of the electronic device based on the country string, set one or more available channels for the electronic device based on the channel list attribute, generate an invitation response including the country code and the available channels, and transmit the invitation response to the external device using the communication module.

According to an embodiment, when the management frame is an invitation response and the electronic device is a GO in a group including the electronic device and the external device, the processor may determine a target channel for communication of the group based on the available channels, generate a channel switch announcement based on the target channel, and transmit the channel switch announcement to the external device using the communication module.

According to an embodiment, when the management frame is an invitation response and the electronic device is a GC in a group including the electronic device and the external device, the processor may determine a target channel for communication of the group based on the available channels, generate a channel switch request based on the target channel, and transmit the channel switch request to the external device using the communication module.

According to an embodiment, the electronic device and the external device may operate based on a communication protocol of Wi-Fi P2P.

According to an embodiment, the electronic device and the external device may operate based on a communication protocol of Wi-Fi NAN.

According to an embodiment, when the management frame is an NAN beacon frame or an SDF, the processor may obtain a country code based on a country code attribute in the management frame, set, as the one or more available channels, channels available in a country corresponding to the country code, and transmit and receive additional frames to and from the external device based on at least one of the available channels using the communication module.

According to an embodiment, when the management frame is a data path request, the processor may obtain available channel information from an availability entry of an availability attribute in the data path request, set the one or more available channels for the electronic device based on the available channel information, generate a data path response based on the available channels, and transmit the data path response to the external device using the communication module.

According to an embodiment, when the management frame, which is an NAN beacon frame, an SDF, or an NDF, is received from the external device in a state in which a data path is established between the electronic device and a second external device (e.g., the electronic device 104 of FIG. 1, the electronic device 230 of FIG. 2, or the second external device 1300c of FIG. 13), the processor may generate a scheduler request based on the one or more available channels, transmit the schedule request to the second external device using the communication module, receive a schedule response to the schedule request from the second external device using the communication module, and change the data path to a target channel among the available channels based on the schedule response.

According to an embodiment, when the external device pairs with the electronic device via a BLE network, the management frame may be a data frame of the BLE network, and the processor may obtain the target information, based on at least one of a country string and a channel list attribute included in the data frame.

According to an embodiment, when paired with the external device via the BLE network through the communication module, the processor may receive, as the management frame, a data frame including a target protocol and operating channel information for the target protocol from the external device via the BLE network, obtain target information based on the target protocol and the operating channel information included in the data frame, set one or more available channels for the target protocol based on the obtained target information, and perform passive scanning on a protocol on the one or more available channels.

According to an embodiment, a method performed by an electronic device (e.g., the electronic device 101 of FIG. 1, the electronic device 210 of FIG. 2, the electronic device 500a of FIG. 5, the electronic device 600a of FIG. 6, the electronic device 700a of FIG. 7, the electronic device 800a of FIG. 8, the electronic device 900a of FIGS. 9a and 9b, the electronic device 1000a of FIG. 10, the electronic device 1100a of FIG. 11, the electronic device 1200a of FIG. 12, and the electronic device 1300a of FIG. 13) may include receiving (e.g., operation 410 of FIG. 4) a management frame transmitted by an external device (e.g., the electronic device 102 of FIG. 1, the electronic device 220 of FIG. 2, the external device 500b of FIG. 5, the external device 600b of FIG. 6, the external device 700b of FIG. 7, the external device 800b of FIG. 8, the external device 900b of FIGS. 9a and 9b, the external device 1000b of FIG. 10, the external device 1100b of FIG. 11, the external device 1200b of FIG. 12, and the external device 1300b of FIG. 13), obtaining (e.g., operation 420 of FIG. 4), as target information, at least one of a country code and available channel information based on the management frame, and setting (e.g., operation 430 of FIG. 4) one or more available channels for the electronic device based on the obtained target information.

According to an embodiment, the electronic device and the external device may operate based on a protocol of Wi-Fi Direct.

According to an embodiment, when the management frame is either a probe request or a probe response, the method of setting one or more available channels for the electronic device may further include performing a search and listening on the one or more available channels.

According to an embodiment, the electronic device and the external device may operate based on a protocol of Wi-Fi NAN.

According to an embodiment, when the management frame is an NAN beacon frame or an SDF, the obtaining of the target information may include obtaining the country code based on a country code attribute in the management frame, the setting of the one or more available channels may include setting, as the one or more available channels, channels available in a country corresponding to the country code, and the method of setting the one or more available channels for the electronic device may further include transmitting and receiving additional frames to and from the external device based on at least one of the available channels.

The embodiments described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor or any other device capable of responding to and executing instructions in a defined manner. The processing device may run an OS and one or more software applications that run on the OS. The processing device also may access, store, manipulate, process, and create data in response to execution of the software. For purpose of simplicity, the description of a processing device is singular; however, one of ordinary skill in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or one or more combinations thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media, such as hard disks, floppy disks, and magnetic tape, optical media, such as CD-ROM discs and/or digital versatile discs (DVDs); magneto-optical media, such as optical discs; and hardware devices that are specially configured to store and perform program instructions, such as read only memory (ROM), random access memory (RAM), flash memory, and the like. Examples of program instructions include both machine code, such as produced by a compiler, and files containing higher-level code that may be executed by the computer using an interpreter.

The above-described devices may be configured to act as one or more software modules in order to perform the operations of the above-described examples, or vice versa.

As described above, although the example embodiments have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

## Claims

1. An electronic device comprising:
a communication module configured to exchange data with an external device; and
at least one processor configured to control the electronic device,
wherein the processor is configured to:
receive a management frame transmitted by the external device using the communication module;
obtain, as target information, at least one of a country code and available channel information based on the management frame; and
set one or more available channels for the electronic device based on the obtained target information.

2. The electronic device of claim 1, wherein the management frame is received through a social channel of 2.4 gigahertz (GHz).

3. The electronic device of claim 1,
wherein the management frame is either a probe request or a probe response, and
wherein the processor is configured to perform a search and listening on the one or more available channels using the communication module.

4. The electronic device of claim 1, wherein the management frame is a group owner (GO) negotiation request or a GO negotiation response.

5. The electronic device of claim 4,
wherein the management frame is a GO negotiation response, and
wherein the processor is configured to:
obtain, as target information, a country string and a channel list attribute comprised in the GO negotiation response;
update a country code of the electronic device based on the country string;
set one or more available channels for the electronic device based on the channel list attribute;
determine an operating channel based on the set available channels;
generate a GO negotiation confirmation based on the operating channel; and
transmit the GO negotiation confirmation to the external device using the communication module.

6. The electronic device of claim 1,
wherein the management frame is an invitation request, and
wherein the processor is configured to:
obtain, as target information, a country string and a channel list attribute comprised in the invitation request;
update a country code of the electronic device based on the country string;
set one or more available channels for the electronic device based on the channel list attribute;
generate an invitation response comprising the country code and the available channels; and
transmit the invitation response to the external device using the communication module.

7. The electronic device of claim 1,
wherein the management frame is an invitation response, and
wherein the processor is configured to:
when the electronic device is a group owner (GO) in a group comprising the electronic device and the external device, determine a target channel for communication of the group based on the one or more available channels,
generate a channel switch announcement based on the target channel, and
transmit the channel switch announcement to the external device using the communication module.

8. The electronic device of claim 1,
wherein the management frame is an invitation response, and
wherein the processor to:
when the electronic device is a group client (GC) in a group comprising the electronic device and the external device, determine a target channel for communication of the group based on the one or more available channels;
generate a channel switch request based on the target channel; and
transmit the channel switch request to the external device using the communication module.

9. The electronic device of claim 1, wherein the electronic device and the external device operate based on a communication protocol of wireless-fidelity (Wi-Fi) neighborhood aware networking (NAN).

10. The electronic device of claim 9,
wherein the management frame is a NAN beacon frame or a service discovery frame (SDF), and
wherein the processor is configured to:
obtain the country code based on a country code attribute in the management frame;
set, as the one or more available channels, channels available in a country corresponding to the country code; and
transmit and receive additional frames to and from the external device based on at least one of the one or more available channels using the communication module.

11. The electronic device of claim 9,
wherein the management frame is a data path request, and
wherein the processor is configured to:
obtain the available channel information from an availability entry of an availability attribute in the data path request;
set the one or more available channels for the electronic device based on the available channel information;
generate a data path response based on the one or more available channels; and
transmit the data path response to the external device using the communication module.

12. The electronic device of claim 9,
wherein the management frame is an NAN beacon frame, a service discovery frame (SDF), or an NAN action frame (NAF) in a state in which a data path is established between the electronic device and a second external device, and
wherein the processor is configured to:
generate a schedule request based on the one or more available channels,
transmit the schedule request to the second external device using the communication module;
receive a schedule response to the schedule request from the second external device using the communication module; and
change the data path to a target channel among the available channels based on the schedule response.

13. The electronic device of claim 1, wherein
when the external device pairs with the electronic device via a Bluetooth low energy (BLE) network, the management frame is a data frame of the BLE network, and
wherein the processor is configured to obtain the target information, based on at least one of a country string and a channel list attribute comprised in the data frame.

14. The electronic device of claim 1, wherein processor is configured to:
when paired with the external device via a Bluetooth low energy (BLE) network through the communication module, receive, as the management frame, a data frame comprising a target protocol and operating channel information for the target protocol from the external device via the BLE network; and
receive the management frame of the target protocol transmitted by the external device based on the target protocol and the operating channel information comprised in the data frame.

15. A method performed by an electronic device, the method comprising:
receiving a management frame transmitted by an external device;
obtaining, as target information, at least one of a country code and available channel information based on the management frame; and
setting one or more available channels for the electronic device based on the obtained target information.
